# EUROPEAN PATENT APPLICATION

(11) **EP 2 500 759 A2**
(43) Date of publication of application: **19.09.2012**
(21) Application number: 12169996.1
(22) Date of filing: 23.12.2005
(51) Int. Cl.: G02B 7/02

(54) **Method of fixing an optical member and an optical unit made thereby**

(30) Priority: 27.12.2004 JP 2004376819; 28.12.2004 JP 2004380786
(62) Divisional of application: 05258055.2
(71) Applicant: Canon Kabushiki Kaisha, Tokyo 146-8501 (JP)
(72) Inventor: Watanabe, Sachiko, Tokyo (JP); Seita, Masato, Tokyo (JP)
(74) Representative: Foxon, Rachel Siobhan

(57) **Abstract**

In a method of fixing an optical member (151) to a supporting member (152), an intermediate member (153) that is heat fused upon irradiation by laser light is disposed between the optical member and the supporting member. By irradiating through the optical member onto the intermediate member, the intermediate member is heated and fused, and the optical member is fixed to the supporting member.

## Description

### BACKGROUND OF THE INVENTION

### Field of the Invention

The present invention relates to a method of fixing an optical member, such as an image taking lens, to a supporting member. It also relates to a method of fixing optical members to one other and also to an optical unit.

### Related Background Art

One known method of fixing a lens to a lens supporting frame, consists of mounting the lens onto a lens frame made of a resin material, then deforming an outer peripheral end portion of the lens frame by a known method such as heat caulking to thereby fix the lens onto the lens frame.

An alternative method of fixing an outer peripheral portion of a lens onto a lens frame using an ultraviolet curing adhesive is also known.

In addition, it is known to introduce an adhesive between a side surface of a lens and the lens frame after adjusting the relative positions to adhere the lens onto the lens frame by a side surface of the lens.

Further, a method is known in which a lens is brought into contact with a welding surface of the lens frame made of a laser absorbing plastic, and a laser beam is irradiated onto the welding surface of the lens frame to fix the lens onto the lens frame.

### SUMMARY OF THE INVENTION

According to a first aspect of the present invention there is provided a method as specified in claims 1 to 8. According to a second aspect of the present invention there is provided an optical unit as specified in claims 9 to 13.

Other objects and features of the present invention will become apparent from the following description and the attached drawings.

### BRIEF DESCRIPTION OF THE DRAWINGS

The invention will now be described, by way of example only, with reference to the accompanying schematic drawings, in which:
FIG. 1 is a perspective cross-sectional view showing structural components used for a method of fixing an optical member according to a first embodiment of the present invention;
FIG. 2 is a cross sectional view showing an optical unit where a lens is fixed by an intermediate member shown in FIG. 1;
FIG. 3 is a perspective view of across section that shows structural components used for a method of fixing an optical member according to a second embodiment of the present invention;
FIG. 4 is a cross sectional view showing an optical unit where a lens is fixed by an intermediate member shown in FIG. 3;
FIGS. 5A, 5B, and 5C are cross sectional views showing examples of various shapes of intermediate members as used in the second embodiment of the present invention;
FIG. 6 is a perspective cross-sectional view showing structural components used for a method of fixing an optical member according to a third embodiment of the present invention;
FIG. 7 is a plan view showing an example of a shape of an intermediate member as used in the third embodiment of the present invention;
FIGS. 8A and 8B are plan views that respectively show an example of a shape of another intermediate member as used in the third embodiment of the present invention;
FIG. 9A is a perspective cross-sectional view showing an example of a shape of an intermediate member used for a method of fixing an optical member according to a fourth embodiment of the present invention;
FIGS. 9B and 9C are cross sectional views that respectively show a state where a lens is fixed by an intermediate member according to the fourth embodiment of the present invention;
FIG. 10 is a perspective view cross section showing structural components used for a method of fixing an optical member according to a fifth embodiment of the present invention;
FIG. 11A is a cross sectional view showing an optical unit before a lens is fixed by an intermediate member shown in FIGS. 10;
FIG. 11B is a cross sectional view showing a state after a lens is fixed by an intermediate member shown in FIG. 10;
FIGS. 12A and 12B are perspective cross-sectional views that respectively show a method of fixing the optical member in a case where the composite members shown in FIG. 10 are used;
FIG. 13 is a perspective cross-sectional view showing structural components in a case where an intermediate member of a different shape is used in the method of fixing the optical member according to the fifth embodiment of the present invention;
FIGS. 14A and 14B are perspective cross-sectional views that respectively show a method of fixing the optical member in a case where the structural components shown in FIG. 13 are used;
FIG. 15 is an exploded perspective view showing a configuration of a lens assembly for which a method of fixing an optical member according to a sixth embodiment of the present invention is used;
FIG. 16A is a longitudinal sectional view showing an optical unit where an intermediate member 113 is incorporated into a lens frame 112;
FIG. 16B is a longitudinal sectional view showing an optical unit where a lens 111 is incorporated into the lens frame 112;
FIG. 16C is a longitudinal sectional view showing an irradiation by a laser beam at the time of fixing of a lens 111 to the lens frame 112;
FIG. 17 is a longitudinal sectional view showing a lens assembly in which a concave lens is fixed to the lens frame;
FIG. 18A is a plan view showing another example of an intermediate member;
FIG. 18B is a plan view showing a further example of an intermediate member;
FIG. 18C is a plan view showing another example of an intermediate member;
FIG. 19 is an exploded perspective view showing a configuration of a lens assembly for which a method of fixing an optical member according to a seventh embodiment of the present invention is used;
FIG. 20 is a longitudinal sectional view showing an optical unit where the lens shown in FIG. 19 is fixed to the lens frame via an intermediate member;
FIG. 21A is a longitudinal sectional view showing an optical unit where the intermediate member is incorporated into the lens frame shown in FIG. 19;
FIG. 21B is a longitudinal sectional view showing an optical unit where the intermediate member and the lens are incorporated into the lens frame shown in FIG. 19;
FIG. 22 is a plan view showing an optical unit where the intermediate member is incorporated into the lens frame shown in FIG. 19;
FIG. 23 is a plan view and a side view of an intermediate member as used in a method of fixing an optical member according to an eighth embodiment of the present invention;
FIG. 24A is a longitudinal sectional view showing an optical unit where the intermediate member is incorporated into the lens frame;
FIG. 24B is a longitudinal sectional view showing an optical unit where a lens is incorporated into the lens frame; and
FIG. 24C is a longitudinal sectional view showing an irradiating laser beam at the time of fixing the lens to the lens frame.

### DESCRIPTION OF THE PREFERRED EMBODIMENTS

### First embodiment

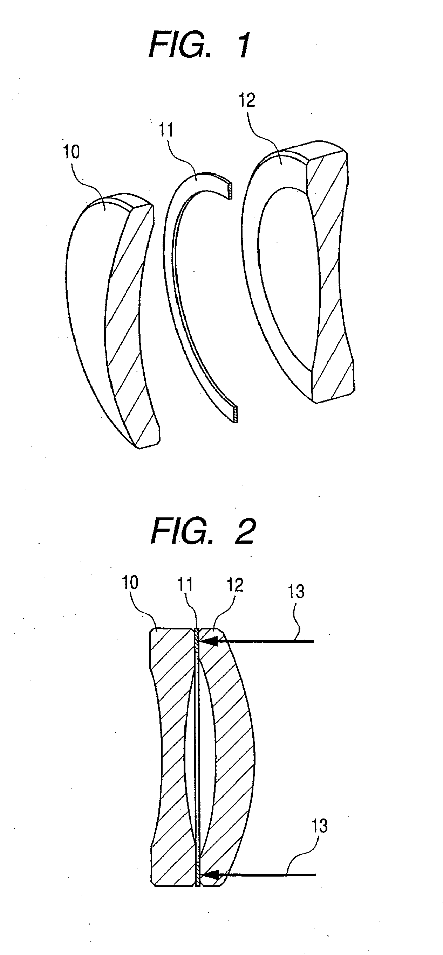

FIG. 1 is a perspective view of a cross section showing structural components used for a method of fixing an optical member according to a first embodiment of the present invention.

In FIG. 1, reference numerals 10 and 12 respectively denote an optical glass lens, and reference numeral 11 denotes an intermediate member made of a sheet material formed in a shape of a ring and intervening between light incidence/emission surfaces of the lens 10 and the lens 12 at the time of assembly. The intermediate member 11 is made from a material not transparent to visible light. The intermediate member 11 also functions as an optical stop that has a function for shielding a reflected harmful light beam from, for example, a peripheral portion or structural components (not shown) other than image taking light beams. The intermediate member 11 is made by mixing a material whose adhesive strength is increased upon application of heat (a material which significantly absorbs near-infrared light (for example, a prescribed coloring material such as carbon black, dye or pigment) into a thermo-fusing sheet and a thermal adhesive sheet (thermosetting type) containing, for example, polyester, polyimide, polyurethane, ionomer resin, or a copolymer resin of ethylene and methacrylic acid as a main component).

The intermediate member may comprise a thermosetting material, a thermoplastic material, or a hot-melt adhesive material. As an alternative it may comprise a light curing adhesive material.

FIG. 2 shows a cross sectional view showing an optical unit where the lens 10, the lens 12, and the intermediate member 11 are incorporated. Reference numeral 13 denotes a laser beam for fixing the lens 10 and the lens 12 by irradiating using near-infrared light in a manner as described below and thereby increasing the adhesive strength of the intermediate member 11.

In a method of fixing an optical member according to the first embodiment of the present invention, the lens 10 and the lens 12 are fixed using a process as described below.

As described above, in an optical unit where the lens 10 is incorporated with the lens 12 via the intermediate member 11, the lenses 10 and 12 and the intermediate member 11 are brought into close contact with each other using a pressurizing device (not shown). At this time, the positions of the lens 10 and the lens 12 between which the intermediate member 11 is held are regulated in a direction orthogonal to an optical axis by a positioning alignment frame (not shown) at peripheral edge portions of the lens 10 and lens 12. Accordingly, the intermediate member 11 is positioned without extending into the effective diameter of the lens 10 and lens 12. In this example, a spot-like laser beam 13 is emitted through a light incidence/emission plane of the lens 12 from a laser beam irradiation device (not shown). This beam is then transmitted through the lens 12 onto the intermediate member 11. As described above, the intermediate member 11 is made of a material that absorbs near-infrared light, and whose adhesive strength is increased upon application of heat. As a result, the adhesive strength of the intermediate member 11 is instantaneously increased when the intermediate member 11 absorbs the laser beam 13. At this time, the intermediate member 11 is adhered and fixed to the lens 10 and the lens 12. Note that after a prescribed irradiation time, the irradiation of the laser beam is ended, completing the process of fixing the lens.

As described above, the lenses 10 and 12 are directly fixed by heating the intermediate member 11, so the lenses 10 and 12 can be fixed with a high accuracy while saving space. In addition, a lens frame that supports the lenses 10 and 12 can be downsized.

Note that in a contacting portion between the intermediate member 11 and the lenses 10 and 12, if the press contact between the lenses 10 and 12 and the intermediate member 11 by a pressurizing device (not shown) is released and the positioning alignment frame (not shown) is removed, the lens 10 and the lens 12 are constantly fixed to each other by the adhesive strength of the intermediate member 11. Thus, the lens 10 and the lens 12 are positioned with high accuracy and with no play. Further, the assembly is rugged, because the intermediate member 11 is resilient, and can thus deform elastically in the case that an intense impact is applied, so that the lens 10 and the lens 12 are not broken. Thus, the two lenses 10 and 12 remain fixed to the intermediate member 11 in their aligned positions.

In the first embodiment described above, the lens 10, the lens 12, and the intermediate member 11 are exposed to the laser beam irradiation after they have been assembled and aligned.. However, it is possible to employ such a configuration where the lens 10 is supported by a vacuum suction tool and the like, that the position of the intermediate member 11 is aligned, that eccentricity and inclination of the lens 12 is adjusted, and that the laser beam is irradiated after the alignment with the aligned state being maintained.

According to the first embodiment of the present invention, the laser beam is irradiated in a spot form at a plurality of positions. However, the irradiated pattern is not limited to this. The laser beam 13 may be irradiated in accordance with a shape of the intermediate member 11.

In irradiating the spot-like laser beams at a plurality of positions, it is preferable that positions be equally spaced from one another on the intermediate member 11. If the intermediate member 11 is not formed in a ring-like shape (such as for example a barrel shape), the interval of the irradiation positions may not be equal to each other, that is, the laser beam may be irradiated at intermediate positions of the respective sides of the intermediate member 11. In this case, it is preferable that each of the spot positions be positioned on a circumference of a circle having a center on the optical axis.

Further, the laser beam may be irradiated in a spot form at a plurality of positions at the same time, and if the laser beams are not irradiated at the same time, the laser beams may be sequentially irradiated in a spot form at diagonally arranged positions.

In addition, the fixing may be carried out by rotating the lens 10 and the lens 12 or by rotationally moving the laser beam irradiation positions by, for example, irradiating the laser beams at the same time at three positions at equal intervals (arranged in 120-degree angles with respect to each other) before the direction of the irradiation of the laser beams is rotated clockwise or counterclockwise at an angle of 60 degrees to thereby perform fixing at six positions in total.

In addition to this, the angle of irradiation of the laser beams may be set so that the laser beams are perpendicularly irradiated onto a surface of the intermediate member 11. The laser beams are not necessarily perpendicularly irradiated. The laser beams may be irradiated onto the surface of the intermediate member 11 from other directions.

Further, in the case of the laser beams irradiated at a plurality of portions at the same time, the laser beams may be irradiated with a time difference that does not affect a positional accuracy of the lens 10 and lens 12. In this case, the time difference may be, for example, several tens of milliseconds to several hundreds milliseconds.

The above lens is may be made of a glass material or of a resin material.

In addition, in the method of fixing the optical member as described above, the fixing may be carried out on the light incidence/emission plane of the lens, and therefore an outer diameter dimension of the lens does not need to be highly accurately arranged. Accordingly, the lens may be a lens to which a centering process is not carried out. Here, the centering process is a process for finishing the outer diameter of the lens by matching a curvature center of the lens and an outward form center of the lens.

Accordingly, when the lens and the lens frame are fixed to each other by using the method of fixing the optical member of this embodiment, it is not necessary to fix the lens to the lens frame at the outer diameter portion of the lens. Therefore, it is not necessary to form a shape of the lens frame so as to encircle the lens along the outer periphery of the lens frame, thereby making it possible to downsize the lens frame.

Further, the fixing of the lens frame (not shown) and the lens may be carried out by using a conventional method, or by using the method of the present invention by disposing the intermediate member between a lens supporting member and the lens.

In addition, the lenses may be mounted to a lens supporting member after the lenses are fixed to each other by the method of the present invention. Alternatively, one of the lenses may be mounted to the lens supporting member before the other lens is mounted.

The method of fixing the optical member according to this embodiment is fairly precise, because the intermediate member 11 is in a sheet-like form with a thickness of several micrometers to several tens of micrometers.

The melting point of the intermediate member 11 is sufficiently lower than those of the lens 10 and lens 12, so the lens 10 and the lens 12 are not subjected to heat damage by the irradiation of the laser beams.

In this embodiment, the positioning of the lens 10 and lens 12 is carried out by surface contact via the intermediate member 11. However, the present invention is not limited to this. The positioning may be carried out by line contact and/or point contact.

### Second Embodiment

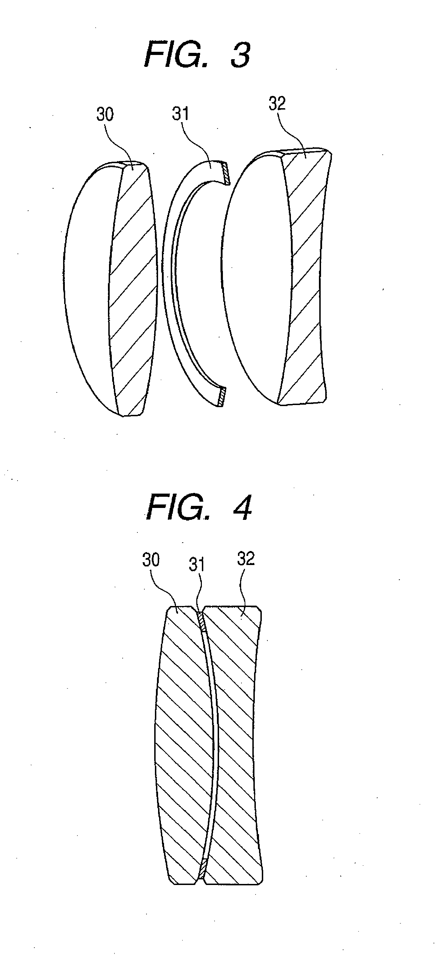

FIG. 3 is a perspective view of a cross section that shows structural components used for a method of fixing an optical member according to a second embodiment of the present invention. FIG. 4 is a cross sectional view showing an optical unit where lenses and an intermediate member are incorporated.

In the second embodiment of the present invention, the same structural components as those of the first embodiment of the present invention are used, and the surface of the intermediate member 31 is shaped to curve along the curvature of the concave or convex surfaces of lenses 30 and 32. For example, the intermediate member 31 may be shaped in this way after it has been cut from a planar sheet in the form of a ring. Thus, the cross-sectional shape of intermediate member 31 is altered to conform with and to come into close contact with the light incidence/emission surfaces of a lens having irregularities without any wrinkles.

The method of fixing the optical member of the second embodiment of the present invention is substantially the same as that of the first embodiment of the present invention.

As described above, the surface of the intermediate member 31 contacting the lens 30 and the lens 32 is formed in a shape along the light incidence/emission surfaces of the lens 30 and lens 32, so the intermediate member 31 can be readily brought into close contact with the lens 30 and the lens 32, as shown in FIG. 4.

In addition, in the second embodiment of the present invention, the shape of the surface of the intermediate member 31 is formed along the curvature of the light incidence/emission surface of the lens by a method of forming the intermediate member 31 after it is cut or stamped from a sheet. However, the intermediate member 31 is not limited to this configuration. The shape of the intermediate member 31 may be formed by other methods in order to attain a similar effect.

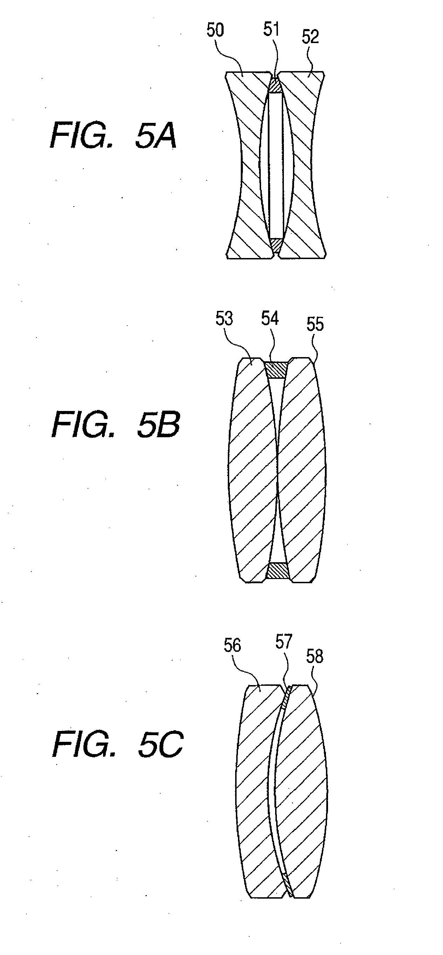

As an example, the lenses of a combination as shown in FIGS. 5A, 5B, and 5C can also be fixed by forming the shape of the intermediate member 31 along with the shape of the lenses to be fixed. FIG. 5A is a cross sectional view of a main portion that shows a state where a concave lens 50 and a concave lens 52 are fixed by an intermediate member 51. FIG. 5B is a cross sectional view that shows a convex lens 53 and a convex lens 55 being fixed by an intermediate member 54. FIG. 5C is a cross sectional view that shows a concave lens 56 and a convex lens 58, each of which has a curvature different from each other, being fixed by an intermediate member 57.

Here, an explanation is made in the case where the concave lens 50 and the concave lens 52 are fixed as shown in FIG. 5A. The intermediate member 51 is formed in such a manner that a surface contacting the concave lens 50 and the concave lens 52 is shaped along the curvature of the light incidence/emission surfaces of the lenses, so the intermediate member 51 can readily be brought into close contact with the concave lens 50 and the concave lens 52. Similarly, also in the case where the convex lens 53 and the convex lens 55 are fixed as shown in FIG. 5B and in the case where the concave lens 56 and the convex lens 58 having a curvature different from each other are fixed as shown in FIG. 5C, the surface of each of the intermediate members 54 and 57 is shaped along the light incidence/emission surfaces of the lenses, so the intermediate member can readily be brought into close contact with the lenses.

Of course, in order to obtain a similar effect, the shape of the intermediate member may be formed in another shape.

The lens may be made from a glass or a plastic or resin material.

The lens may be a lens to which the centering process is not carried out.

### Third Embodiment

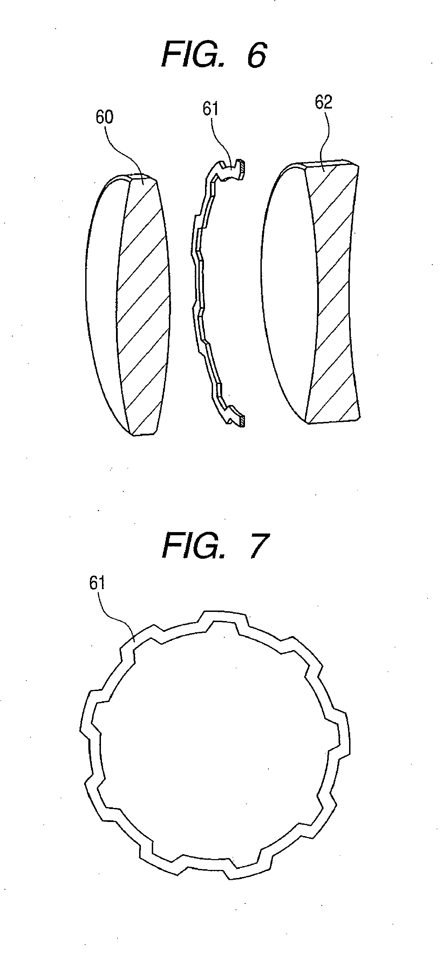

FIG. 6 is a perspective view of a cross section showing structural components used for a method of fixing the optical member according to a third embodiment of the present invention.

The method of fixing the optical member of the third embodiment of the present invention is identical to that of the first embodiment of the present invention.

An intermediate member 61 used in the third embodiment of the present invention has, as shown in FIG. 7, notched portions in both its outer periphery portion and inner periphery portion. Accordingly, the intermediate member 61 can readily be brought into contact with the light incidence/emission surfaces of a lens 60 and lens 62 having irregularities without any wrinkles.

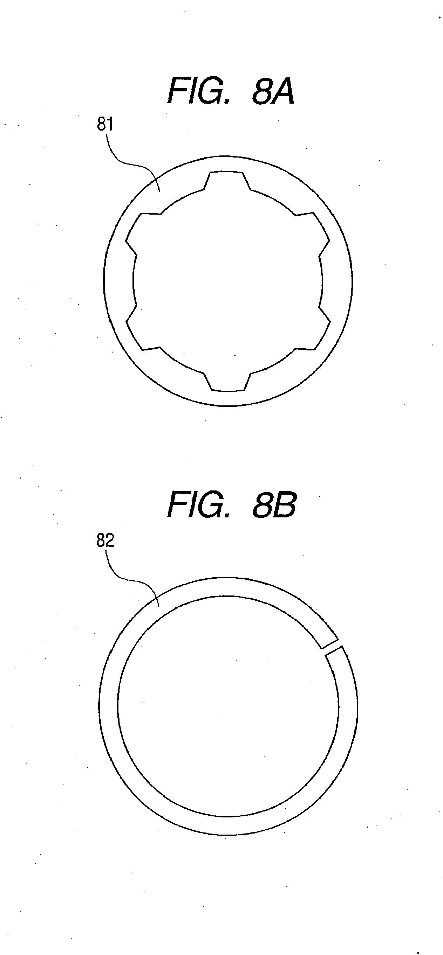

In addition, in the third embodiment of the present invention, the close contact of the intermediate member 61 to the lenses is obtained by forming the notched portion in each of the outer periphery portion and the inner periphery portion of the intermediate member 61. Of course, the notched portion may be shaped in another form. FIGS. 8A and 8B show some other examples of another shape of the notched portion and a shape of a cut portion. FIG. 8A shows one example of the shape of the notched portion, and FIG. 8B shows one example of the shape of the cut portion.

The lenses 60 and 62 and the intermediate member 61 may be disposed so that a whole surfaces thereof come into contact with each other. Further, the lenses 60 and 62 and the intermediate member 61 may be disposed so that some parts thereof come into contact with each other. In addition, if the thickness of the intermediate member 61 is set in accordance with an air distance between the lenses, the air distance between the lenses can be achieved without using a spacer or the like.

### Fourth Embodiment

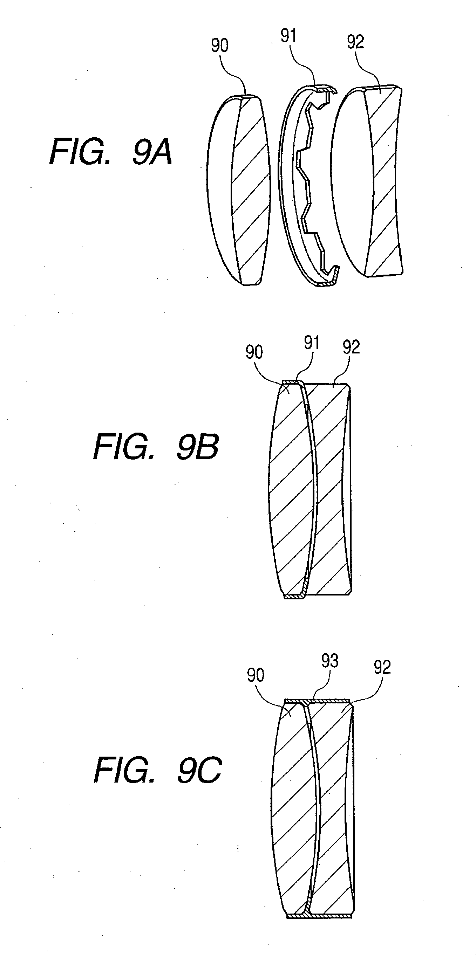

FIG. 9A is a perspective view of a cross section showing structural components used for a method of fixing the optical member that is a fourth embodiment of the present invention, and FIGS. 9B and 9C are cross sectional views each showing a case where a lens is fixed by an intermediate member. FIG. 9A is a view showing a lens 90, a lens 92, and an intermediate member 91, FIG. 9B is a view showing a state after the fixation thereof, and FIG. 9C is a view showing a state after the lens 90 and the lens 92 are fixed by using an intermediate member 93 of another form.

In the fourth embodiment of the present invention, the same structural components as those in the first embodiment of the present invention are used, and the intermediate members 91 and 93 are shaped in such a form as to encircle the lens 90 or in such a form as to encircle an outer peripheral surface of the lens 90 and/or lens 92.

The method of fixing the optical member of the fourth embodiment is identical to that of the first embodiment of the present invention, so the explanation thereof is omitted.

As shown in FIG. 9A, the intermediate member 91 used in the fourth embodiment of the present invention is shaped in a form along the shape of the surface of light incidence/emission surfaces of lens 90 and the lens 92, and is formed so as to encircle an outer peripheral edge surface of the lens 90. Accordingly, as shown in FIG. 9B, the lens 90 and the lens 92 are fixed by the intermediate member 91, and the intermediate member 91 has a light shielding effect for shielding the light beams other than effective light beams, such as stray light from the outer peripheral end surface of the lens 90.

The intermediate member 91 is preferably provided with cut portions, so the intermediate member 91 can readily be brought into close contact with the lens surface having irregularities thereon without any wrinkles, creases or folds.

Further, in the case where the intermediate member is shaped in such a form as to encircle the outer peripheral surface of the lens 90 and lens 92 like the intermediate member 93 shown in FIG. 9C, the lens 90 and the lens 92 are fixed by the intermediate member. As well, in this case, the intermediate member has a light shielding effect with respect to the lens outer peripheral end surface of the lens 90 and lens 92 to thereby shield stray light from the lens outer peripheral edge surface of the lens 90 and lens 92.

### Fifth Embodiment

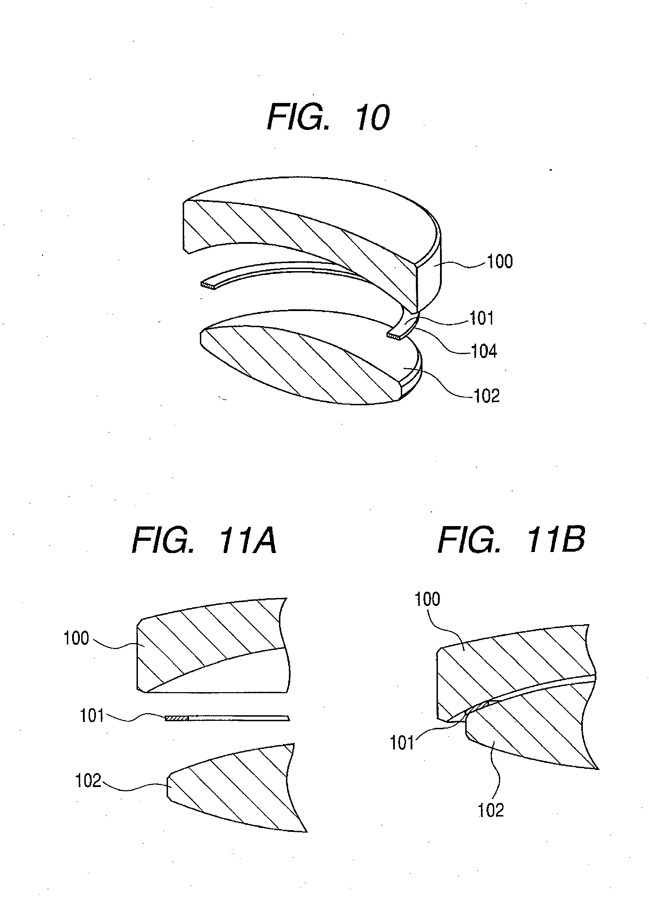

FIG. 10 is a perspective view of a cross section showing structural components used for a method of fixing the optical member according to a fifth embodiment of the present invention. In FIG. 10, reference numerals 100 and 102 each denote a lens. Reference numeral 101 denotes an intermediate member formed in a ring shape that intervenes between the lens 100 and the lens 102 at the time of manufacture. Reference numeral 104 denotes an outer peripheral edge portion of the intermediate member 101.

In the fifth embodiment of the present invention, the same structural components as those of the first embodiment of the present invention are used, and the fixing position of the lens 100 and the intermediate member 101 is located at a position different from the fixing position of the lens 102 and intermediate member 101.

For example, the lens 100 and the lens 102 that are fixed by the method of this embodiment are different from each other in diameter, as shown in FIG. 10. The diameter of the outer peripheral edge portion 104 of the intermediate member 101 is set to be a value that is approximately equal to an outer diameter of the lens 92. Accordingly, the intermediate member 101 is positioned so that the outer peripheral edge portion 104 of the intermediate member 101 matches the outer peripheral end portion of the lens 102. FIGS. 11A and 11B each show how the lens 100 and the lens 102 are fixed by the intermediate member 101. FIG. 11A is a view showing a state before the positioning and the fixing by the intermediate member 101. FIG. 11B is a view showing a state after the positioning and the fixing by the intermediate member 101. As shown in FIG. 11A, the intermediate member 101 is in a planar shape before being positioned, while after the intermediate member 101 is positioned, the shape of the intermediate member 101 is formed along the curvature of the light incidence/emission surfaces of the lens 100 and lens 102, as shown in FIG. 11B.

In the method of fixing the optical member according to the fifth embodiment of the present invention, the lens 100 and the lens 102 are fixed in accordance with steps described below.

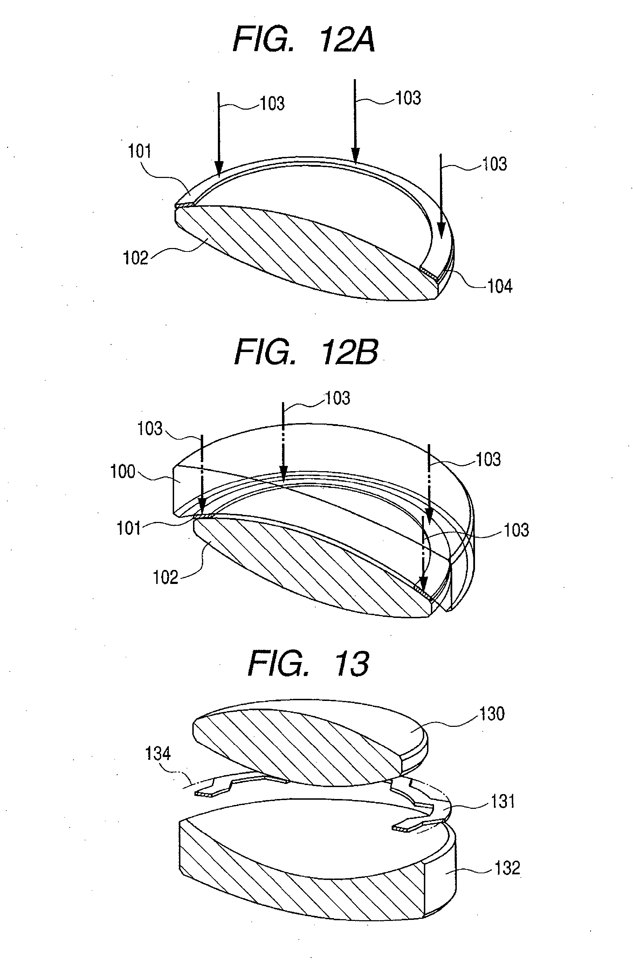

As shown in FIG. 12A, laser beams 103 are irradiated from a laser beam irradiation device (not shown) onto the lens 102 and the intermediate member 101 positioned thereon. As described above, the intermediate member 101 is made of a material that absorbs near-infrared light and whose adhesive strength is increased upon application of heat. Accordingly, the intermediate member 101 is heated by absorption of the laser beam 103, and the adhesive strength of the intermediate member 101 is increased. Thus, the intermediate member 101 is fixed to the lens 102 by the irradiation of the laser beam 103.

Then, as shown in FIG. 12B, the lens 100 is positioned onto the lens 102 and the intermediate member 101, and the lens 100, the intermediate member 101, and the lens 102 are brought into close contact with each other by a pressurizing device (not shown). At this time, the intermediate member 101 is fixed to the lens 102, so the intermediate member 101 does not move with respect to the lens 102 even while the lens 100 is aligned.

As shown in FIG. 12B, the laser beams 103 are irradiated in a state where the lens 100 is correctly positioned. In this case, the irradiation position of the laser beams 103 is carried out at positions which are on the same diameter but which are different from the irradiation position of the laser beams 103 in the case of the irradiation of the laser beams 103 in the above-mentioned state shown in FIG. 12A. The intermediate member 101 is subjected to heat in the portions where the laser beam is irradiated. However, the heat is applied to the intermediate member at positions different from the fixing positions of the lens 102 and the intermediate member 101, so the intermediate member 101 does not deviate from its fixed position relative to lens 102 whilst lens 100 is fixed in place. After a prescribed irradiation time lapses, the irradiation of the laser beam is ended, and the lens fixing process is completed.

In the method of fixing the optical member of this embodiment, the lens 102, which is a basis and a first lens, and the intermediate member 101 are positioned and fixed before the lens 100, which is a second lens, is positioned and fixed. At this time, the fixing position of the first lens and the intermediate member (in other words, the irradiation position of the laser beam 103) is set to be at a position different from the fixing position of the second lens (in other words, the irradiation position of the laser beam 103), thereby fixing the first lens and the second lens via the intermediate member. Here, the explanation is made as to such a configuration that the lens that is the basis is the first lens. However, the lens that is the basis may be either the first lens or the second lens.

In addition, in the method of fixing the optical member of this embodiment, the fixing position of the first lens and the intermediate member and the fixing position of the second lens and the intermediate member are positioned at different positions on the same diameter. However, the fixing positions may be positioned at other positions in order to attain a similar effect.

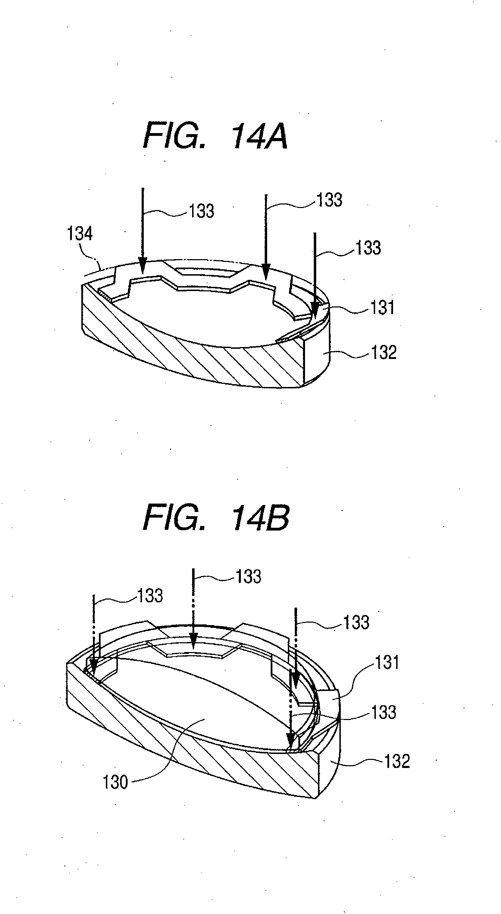

An example of another arrangement of the fixing positions is explained below. FIG. 13 is a perspective view of a cross section that is a modification of the fifth embodiment of the present invention. In FIG. 13, reference numerals 130 and 132 each denote a lens, and reference numeral 131 denotes the intermediate member. Reference numeral 133 denotes a laser beam, and reference numeral 134 denotes an outer peripheral edge portion of the intermediate member 131. The outer diameter of the intermediate member 131 is set to have a value substantially the same as the outer diameter of the lens 132. FIGS. 14A and 14B are perspective views of a cross section each showing a state after the fixing. FIG. 14A is a view showing a state where the lens 132 and the intermediate member 131 are fixed. FIG. 14B is a view showing a state where the lens 130, the intermediate member 131, and the lens 132 are fixed.

The lens 130 and the lens 132 are fixed in accordance with the steps described below.

As shown in FIG. 13, the intermediate member 131 is configured from a sheet material having a ring shape, and has a cut portion on each of an outer peripheral portion and an inner peripheral portion thereof. The lens 132 and the intermediate member 131 are aligned using portions of the outer peripheral end portion 134 of the intermediate member 131 where no notched portion is formed. When the lens 132 and the intermediate member 131 are positioned as shown in FIG. 14A, they are irradiated with the laser beam 133 in the portions that are the outer peripheral portions of the intermediate member 131 where no notched portion is formed. As a result, the intermediate member 131 is subjected to heat, and the adhesive strength of the intermediate member 131 is increased. Thus, the lens 132 and the intermediate member 131 are fixed together.

Then, as shown in FIG. 14B, the lens 130 is positioned onto the lens 132 and the intermediate member 131, and the lens 130, the intermediate member 131, and the lens 132 are brought into close contact with each other by a pressurizing device (not shown). At this time, the intermediate member 131 is fixed to the lens 132, so the intermediate member 131 does not move with respect to the lens 132 even while the lens 130 is aligned.

The laser beams 133 are irradiated when the lens 130 is correctly positioned. As shown in FIG. 14B, in this case, the irradiation position of the laser beams 133 is carried out at positions which are on the same diameter but are different from the irradiation position of the laser beams 133 in the case of the irradiation of the laser beams in the above-mentioned state shown in FIG. 14A, and are located adjacent the inner peripheral portion of the intermediate member 131 where no notched portion is formed. The intermediate member 131 is subjected to heat in a portion at which the laser beam is irradiated. However, the heat is applied to a position different from a fixing position of the lens 130 and the intermediate member 131, so the intermediate member 131 does not deviate from its fixed position. After a prescribed irradiation time lapses, the irradiation of the laser beam is ended, and the lens fixing process is completed.

The lens may be a plastic, resin or glass lens. It may also be a lens to which a centering process is not carried out.

In the five embodiments described above, the embodiments relate to a photographing optical system. However, the present invention is not limited to the configurations described in the above embodiments. For example, the present invention can be applied not only to the case where two lenses are fixed but also to a case where three or more lenses are fixed. The present invention is not limited to the above detailed embodiments, and alternative and/or equivalent means may be employed whilst still falling within the scope of the claims.

### Sixth Embodiment

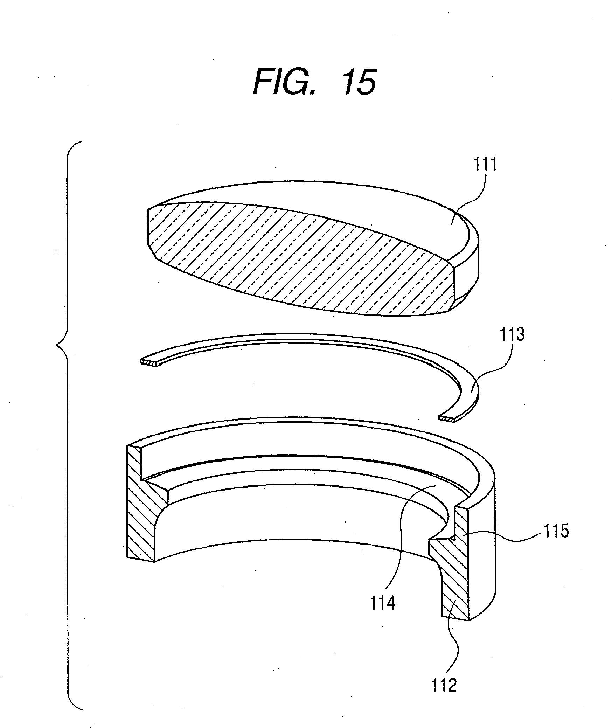

FIG. 15 is an exploded perspective view showing a lens assembly for which a method of fixing an optical member according to a sixth embodiment of the present invention is used.

The lens assembly is, as shown in FIG. 15, provided with a lens 111 that is configured as a concave lens made of a glass material or a resin material, a lens frame 112, and an intermediate member 113 intervening between the lens 111 and the lens frame 112.

The lens frame 112 is configured with a member having a cylindrical shape, and is made of a material that is heated upon absorption of near-infrared light. For example, the lens frame 112 is made of a thermoplastic resin material. A base material of the thermoplastic resin material that configures the lens frame 112 is a resin such as: polyamide (PA) such as nylon 6 (PA6) or nylon 66 (PA66); polyethylene (PE); polypropylene (PP); styrene-acrylonitrile copolymer; polyethylene terephthalate (PET); polystyrene; acrylonitrile butadiene styrene (ABS); polymethylmethacrylate (PMMA); polycarbonate (PC); polybutylene terephthalate (PBT); polyphenylene sulfide (PPS), and a prescribed coloring material such as carbon black, dye or pigment as a laser-beam absorbing agent is mixed therein. A striking feature of absorbing the near-infrared ray is obtained by mixing the coloring material. Here, among those thermoplastic resin materials, polycarbonate is particularly suited for the lens frame 112.

In addition, a glass fiber-reinforced thermoplastic resin material or a carbon fiber-reinforced thermoplastic resin material may be used for the lens frame 112 as the material thereof. Further, the resin may contain components other than those described above, namely, one or more kinds of a filler composed of an inorganic substance or an organic substance such as glass, silica, talc or calcium carbonate, and an additive of common use such as an antistatic agent, a weathering resistance stabilizer or wax etc..

Further, as the coloring material for coloring the thermoplastic resin used for the lens frame 112, a carbon based material such as graphite used as an adjuvant and an inorganic coloring material such as a multicomponent oxide-based pigment may be used. Further, an organic coloring material may be used if the organic coloring material sufficiently absorbs the laser beam. One example of such a coloring material is a copper phthalocyanine system pigment.

In addition, it is preferable that the thermoplastic resins have a transmission factor of 5 % or less with respect to the laser beam to be irradiated. This is because if the transmission factor exceeds 5 %, the energy absorbed by the resin material is decreased.

Further, the material of the lens frame 112 is not limited to the material described above. The material of the lens frame 112 may be any material capable of absorbing the laser beam as a heating source without allowing the laser beam to transmit therethrough.

The intermediate member 113 is configured from a thin sheet material (having a thickness of several micrometers to several tens of micrometers, for example) formed into a ring shape. The sheet material has such a characteristic that the adhesive strength thereof is increased upon application of heat.

The lens frame 112 is provided with two positioning portions 114 and 115 on an inner peripheral surface thereof. The positioning portion 114 is a portion for positioning the intermediate member 113 and the lens 111 with respect to an optical axis direction. The positioning portion 114 is configured with a flange portion protruding from the inner peripheral surface of the lens frame 112, and is formed in a shape corresponding to the surface of the lens 111. The positioning portions 115 is a portion for positioning the intermediate member 113 with respect to the direction orthogonal to the optical axis so as not to allow the intermediate member 113 to be positioned within an effective diameter of the lens 111. An inner diameter dimension of the positioning portions 115 is substantially equal to the outer diameter dimension of the intermediate member 113.

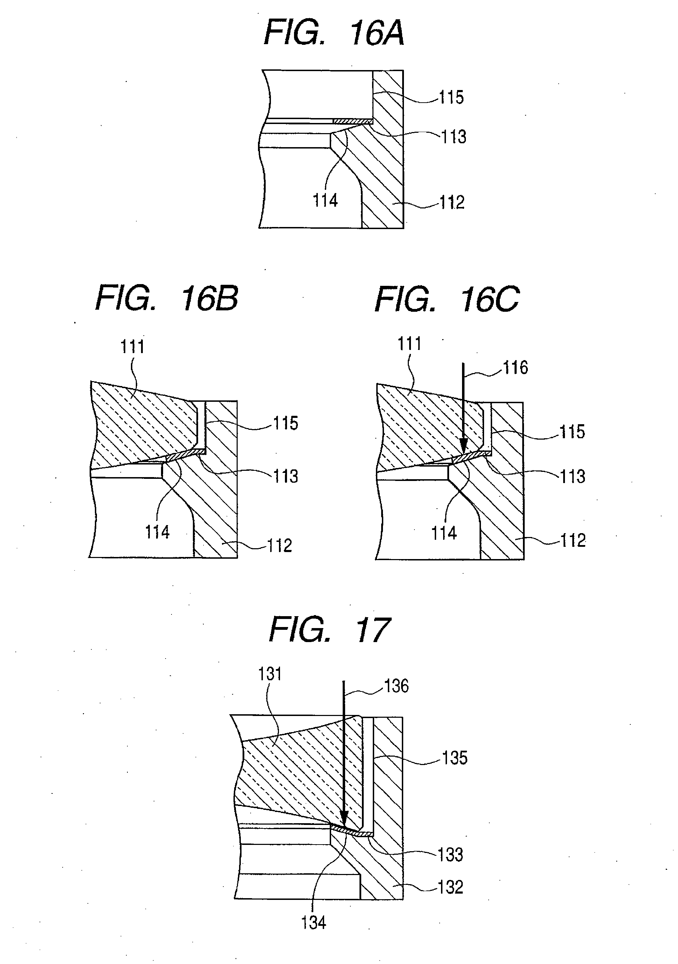

Next, the method of fixing the lens 111 and the lens frame 112 is explained with reference to FIGS. 16A, 16B, and 16C. FIG. 16A is a longitudinal sectional view showing a state where the intermediate member 113 is incorporated into the lens frame 112. FIG. 16B is a longitudinal sectional view showing a state where the lens 111 is also incorporated into the lens frame 112. FIG. 16C is a longitudinal sectional view showing the irradiation by the laser beam at the time of fixing the lens 111 to the lens frame 112.

In fixing the intermediate member 111 to the lens frame 112, first, as shown in FIG. 16A, the intermediate member 113 is inserted into the lens frame 112 and is positioned at the positioning portion 114. As a result, the intermediate member 113 is positioned with respect to the optical axis direction. In addition, the intermediate member 113 is also positioned in the direction orthogonal to the optical axis direction so as not to be positioned within the effective diameter of the lens 111, which is to be inserted later.

Then, as shown in FIG. 16B, the lens 111 is inserted into the lens frame 112 in which the intermediate member 113 is arranged, and is positioned at the positioning portion 114 via the intermediate member 113. At this time, the intermediate member 113 is elastically deformed along the shape of the surface of the positioning portion 114 (along the shape of the surface opposing to the surface of the light incidence/emission plane of the lens 111), and is held between the positioning portion 114 of the lens frame 112 and the surface of the light incidence/emission plane of the lens 111.

When the lens 111 is thus incorporated into the lens frame 112 via the intermediate member 113, the lens 111 is pressed by a pressurizing device (not shown) toward the intermediate member 113 in the optical axis direction of the lens 111. As a result, the lens 111, the intermediate member 113, and the lens frame 112 are supported in a state in which they are in close contact with one another.

After that, as shown in FIG. 16C, a laser beam 116 having a wavelength corresponding to near-infrared light is irradiated from the laser beam irradiation device (not shown) toward the positioning portion 114 in the lens frame 112. In this case, the laser beam 116 transmits through the lens 111 and the intermediate member 113 to reach the positioning portion 114 of the lens frame 112. As described above, the lens frame 112 is configured with the member that absorbs the near-infrared ray, so the positioning portion 114 is heated upon absorption of the laser beam 116. The intermediate member 113 is also heated and fused by the heat generated in the positioning portion 114, and an adhesive strength of the intermediate member 113 is increased due to the characteristic of the intermediate member 113. Then, at this point of time, the irradiation of the laser beam 116 is ended.

When the irradiation of the laser beam 116 is ended, the contacting portion between the intermediate member 113 and the lens 111 and the contacting portion between the intermediate member 113 and the lens frame 112 quickly cool and solidify. As a result, they are fixed in relation to one another. In this case, because of the adhesive strength of the intermediate member 113, even when the pressure applied by the above pressurizing device against the lens 111 is released, the lens 111 is not detached from the lens frame 112. Thus, the lens 111 is positioned with respect to the lens frame 112 with high accuracy and without play, and is fixed onto a prescribed portion, namely, onto the positioning portion 114.

In addition, the intermediate member 113 is preferably resilient, so even when an intense impact is applied to the lens 111 or the lens frame 112, the applied impact is absorbed by the elastic deformation of the intermediate member 113. As a result, due to the characteristic of the intermediate member 113, it is possible to obtain an effect of preventing the lens 111 from being broken or damaged. Further, as described above, the intermediate member 113 is configured from a sheet material having a thickness of several micrometers to several tens of micrometers, so the intermediate member 113 may be accurately located. Further, the melting point of the intermediate member 113 is sufficiently lower than the melting point of the lens 111, so the lens 111 is not subjected to heat damage due to the irradiation of the laser beams.

Thus, according to this embodiment, since the surface of the lens 111 and the positioning portion 114 of the lens frame 112 are fixed by using the intermediate member 113, it is possible to miniaturize the lens frame 112 without deteriorating the optical performance.

Further, the intermediate member 113 is configured with the sheet material whose adhesive strength is increased upon application of heat, so it is possible to omit a process of, for example, filling in the adhesive after the position of the lens 111 is aligned. As a result, it is possible to fix the lens 111 and the lens frame 112 with a simple configuration and high accuracy.

In this embodiment, the shape of the surface of the positioning portion 114 opposing the lens 111 is formed along the shape of the surface of the lens 111. However, the present invention is not limited to this. For example, the surface of the positioning portion 114 opposing the lens 111 may be shaped in such a form that the opposing surface is in line contact or in point contact with the surface of the lens 111.

Further, in this embodiment, the convex lens and the lens frame are fixed. However, the lens may of course be of another shape such as a concave lens.

The example in which the concave lens and the lens frame are fixed is explained with reference to FIG. 17. FIG. 17 is a longitudinal sectional view showing a lens assembly in which a concave lens is fixed to the lens frame.

Just as described above in the case of the lens assembly, an intermediate member 133 intervenes between a concave lens 131 and a cylindrical lens frame 132. In addition, the lens frame 132 is provided with two positioning portions 134 and 135 on an inner peripheral surface of the lens frame 132. The positioning portion 134 is a positioning portion for positioning the lens 131 and the intermediate member 133 with respect to the optical axis direction, in a similar way in the case of the positioning portion 114. The positioning portion 134 is shaped so that the surface of the positioning portion 134 opposing the concave lens 131 is shaped to correspond to the shape of the surface of the concave lens 131. The positioning portion 135 is, in a similar way to the positioning portion 115, a portion for positioning the intermediate member 133 in a direction orthogonal to the optical axis so as not to allow the intermediate member 133 to be positioned within an effective diameter of the concave lens 131.

The concave lens 131 is fixed, in a similar way as in the case of the convex lens, by irradiating with a laser beam 136 having a wavelength corresponding to near-infrared light from a laser beam irradiation device (not shown) toward the positioning portion 134 in the lens frame 132, as shown in FIG. 17. The intermediate member 133 is heated by the heat generated at the positioning portion 134 of the lens frame 132 by the irradiation of the laser beam 136. Thus the adhesive strength of the intermediate member 133 is increased, thereby adhering and fixing the concave lens 131 to the lens frame 132. Thus, the method of fixing the concave lens 131 is the same as the method of fixing the convex lens, so a detailed explanation thereof is omitted.

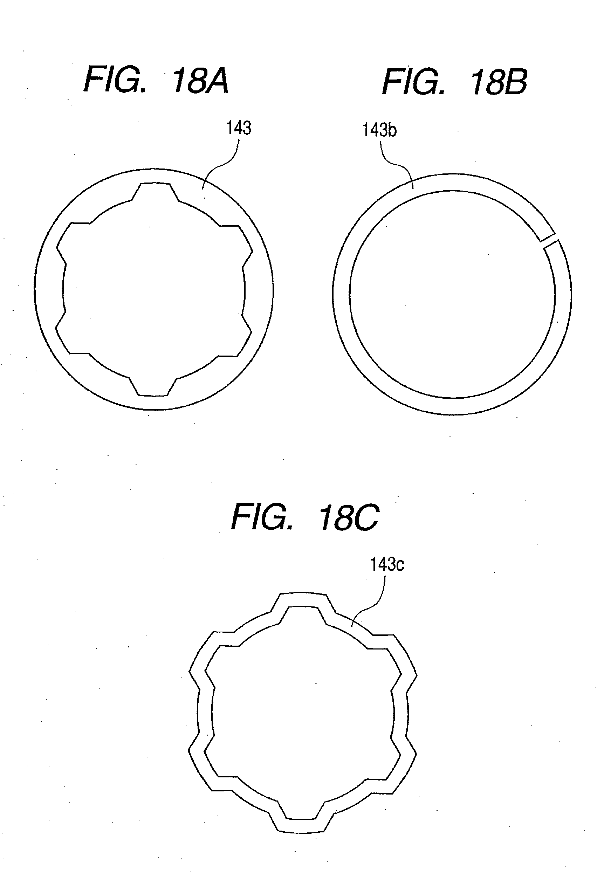

In addition, in this embodiment, intermediate members 113 and 133 having a ring-like shape are used. However, an intermediate member of another form can be used. An intermediate member having another form is explained with reference to FIGS. 18A, 18B, and 18C. FIG. 18A is a plan view showing an example of an alternative intermediate member. FIG. 18B is a plan view showing another example of an intermediate member. FIG. 18C is a plan view showing yet another example of an intermediate member according to the present invention.

An intermediate member 143 having a shape as shown in FIG. 18A can be used. The intermediate member 143 is, in a similar way to the intermediate members 113 and 133, basically configured from a sheet material in a ring-like shape. The intermediate member 143 is provided with a plurality of notched portions in an inner peripheral portion thereof. Because of the plurality of notched portions, the intermediate member 143 may be brought into close contact with the surface of the concave lens or the convex lens without any wrinkles, and thereby the closeness of the contact between the intermediate member 143 and the concave or convex lens is improved.

In order to obtain close contact as in the case of the intermediate member 143, intermediate members 143b and 143c having shapes as shown in FIG. 18B and FIG. 18C, respectively, can be used. Here, the intermediate member 143b is configured from the sheet material formed substantially into a C-shape. The intermediate member 143b is provided with one notched portion extended from an outer peripheral portion thereof to an inner peripheral portion thereof. Further, the intermediate member 143c is configured from the sheet material in a ring-like shape, and is provided with a plurality of notched portions on each of an inner peripheral portion thereof and an outer peripheral portion thereof.

The shape of the intermediate member is not limited to the shapes as described above as examples, and another configuration may be employed. The intermediate member may be arranged so that the surface thereof opposing the lens is wholly brought into contact with the surface of the lens. As an alternative, the intermediate member may be arranged so that the surface thereof opposing the lens is partially brought into contact with the surface of the lens.

In this embodiment, a pattern of irradiation of the laser beam is not especially limited. However, for the irradiation pattern of the laser beam, a pattern in which spot light beams are irradiated at a plurality of positions, or a pattern in which a ringshaped laser beam is irradiated over the whole periphery of the intermediate members 113 and 133, can be used. Further, in a case where the spot light beams are irradiated at the plurality of positions at the same time, the irradiation of each spot light beam is not necessarily carried out at the same time exactly. That is, the laser beams may be irradiated with a time difference that does not affect the positional accuracy of the lens 111. In this case, each spot light beam may be irradiated having a time difference of, for example, several tens of milliseconds to several hundreds milliseconds.

In this embodiment, the intermediate members 113 and 133 are heated by irradiation of the lens frames 112 and 132.. Alternatively or in addition, it is possible to use a mechanism in which the intermediate member is configured using a material made by color coating onto an adhesive sheet material such as a thermo-fusing sheet and a thermal adhesive sheet (a thermosetting type) in order to absorb the laser beam directly, or by using a material made by mixing a prescribed coloring material such as carbon black, dye, and pigment into the adhesive sheet material as a laser-beam absorbing agent to heat the intermediate member by the irradiation of the laser beam. In this case, the lens frame may not necessarily be configured as a laser beam-absorbing member. Further, by using such an intermediate member, the adhesion position can be more freely selected, and it is possible to reduce the time for adhesion.

### Seventh Embodiment

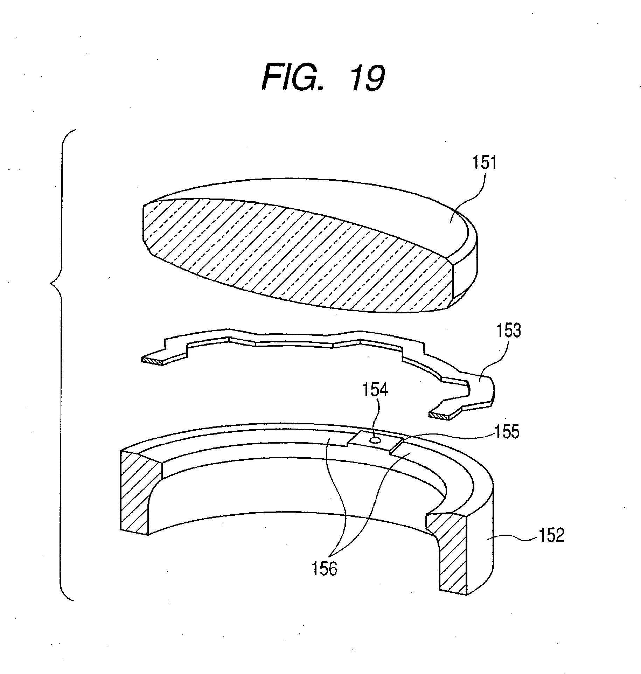

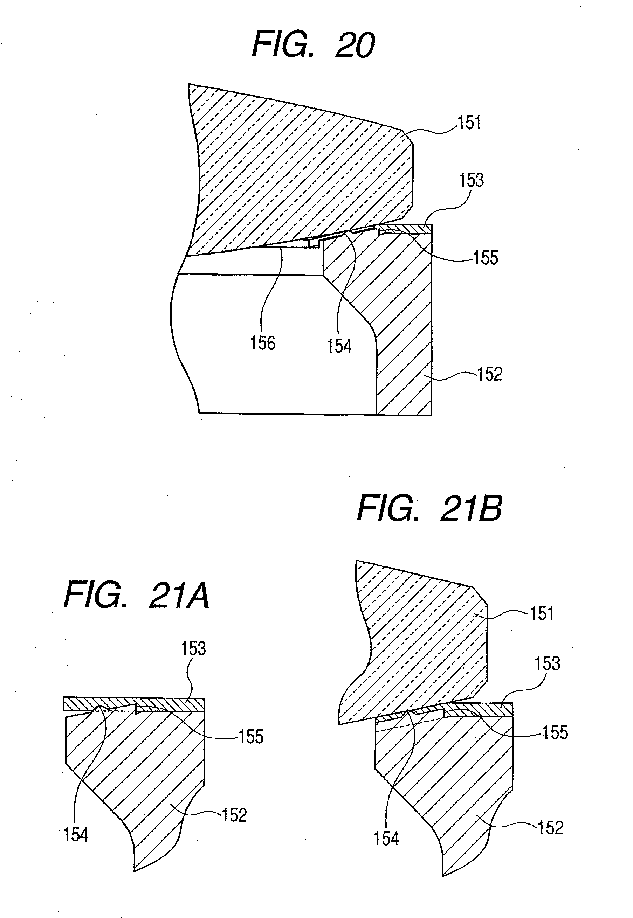

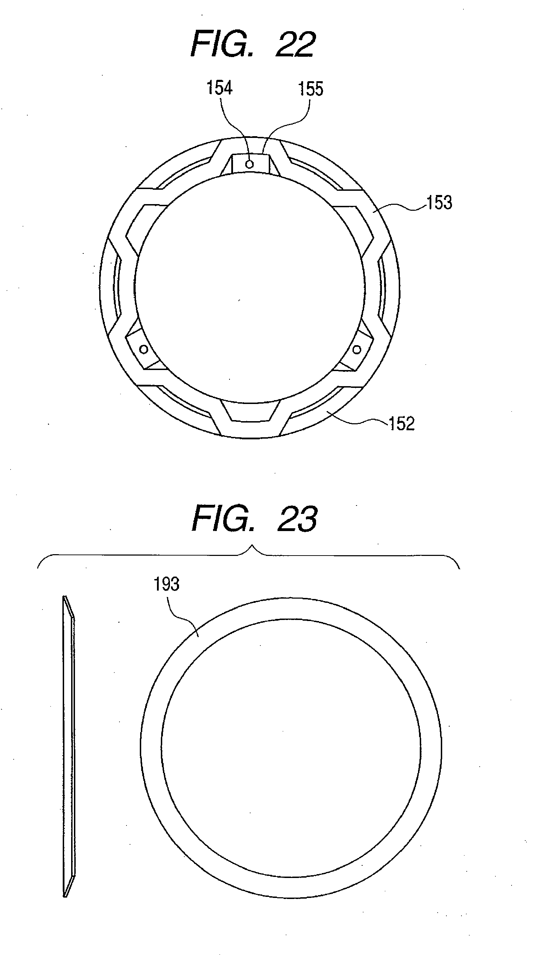

Next, a seventh embodiment of the present invention is explained with reference to FIGS. 19 through 22. FIG. 19 is an exploded perspective view showing a configuration of a lens assembly for which a method of fixing an optical member according to a seventh embodiment of the present invention is used. FIG. 20 is a longitudinal sectional view showing a state where the lens shown in FIG. 19 is fixed to the lens frame via an intermediate member. FIG. 21A is a longitudinal sectional view showing a state where the intermediate member is incorporated into the lens frame shown in FIG. 19. FIG. 21B is a longitudinal sectional view showing a state where the intermediate member and the lens are incorporated into the lens frame shown in FIG. 19. FIG. 22 is a plan view showing a state where the intermediate member is incorporated into the lens frame shown in FIG. 19.

The lens assembly is, as shown in FIGS. 19 and 20, provided with a lens 151 configured as a convex lens, a lens frame 152, and an intermediate member 153 intervening between the lens 151 and the lens frame 152. The lens frame 152 is configured with a cylindrical member, and the material thereof is the same as in the configuration of the sixth embodiment described above. The intermediate member 153 is configured from a thin sheet material formed in a ring shape (having a thickness of several micrometers to several tens of micrometers, for example), and the material thereof is the same as in the configuration in the sixth embodiment of the present invention. In addition, the intermediate member 153 is provided in the same shape as the shape of the intermediate member 143c shown in FIG. 18C. The intermediate member 153 is provided with six notched portions for each of an inner peripheral portion and outer peripheral portion thereof.

At one end portion of the lens frame 152, there are provided a plurality of first positioning portions 154 for positioning the lens 151 in the optical axis direction, a plurality of second positioning portions 155 for positioning the intermediate member 153 in a direction orthogonal to the optical axis direction, and a fixing portion 156 at which the laser beam is irradiated in order to fix the lens frame 152 and the lens 151.

Here, the fixing portion 156 is configured with a portion extended along an inner peripheral portion of one end portion of the lens frame 152, and is shaped in a form to correspond to a surface of the lens 151.

The second positioning portions 155 are configured with a portion protruding upward from the fixing portion 156. The second positioning portions 155 are shaped in a rectangular planar shape as shown in FIG. 22. In addition, the second positioning portions 155 are disposed at equal intervals along the circumference of the fixing portion 156. In this embodiment, three second positioning portions 155 are formed in correspondence with three notched portions from among the six notched portions on the inner peripheral portion of the intermediate member 153.

Each of the first positioning portions 154 is configured with a convex portion formed onto an upper surface of the second positioning portion 155 corresponding thereto, and is disposed at an equal interval as shown in FIG. 22. In this embodiment, three first positioning portions 154 are formed.

In this embodiment, there is no wall surface surrounding the outer diameter (edge) of the lens 151 in the outer peripheral portion of the lens frame 152, and the outer diameter of the lens frame 152 and the outer diameter of the lens 151 are substantially equal.

In first fixing the lens 151 to the lens frame 152, as shown in FIG. 21A, the intermediate member 153 is positioned at the positioning portion 156, and the intermediate member 153 is positioned by the second positioning portions 155 in a direction orthogonal to the optical axis with respect to the lens frame 152. The positioning is carried out by inserting and fitting the notched portions formed in the inner peripheral portion of the intermediate member 153 into the second positioning portions 155 as shown in FIG. 22.

Then, as shown in FIG. 21B, the lens 151 is aligned and brought into contact with the first positioning portions 154 of the lens frame 152 to which the intermediate member 153 has been positioned. Here, the thickness of the intermediate member 153 is set so that the member 153 is positioned slightly lower than the first positioning portions 154 when the lens 151 is incorporated into the lens frame 152. With this setting, in the state where the lens 151 is in contact with the first positioning portions 154 of the lens frame 152, a slight clearance is formed between the intermediate member 153 and the lens 151. In addition, in this state, the intermediate member 153 is elastically deformed along the shape of a surface of the lens 151, and is brought into close contact with the lens 151.

In this way, in the state where the lens 151 and the intermediate member 153 are incorporated into the lens frame 152, a laser beam having a near-infrared component is irradiated from a laser irradiation device (not shown). That is, the laser beam is transmitted through the lens 151 and is irradiated onto the fixing portion 156 via (being transmitted through) the intermediate member 153, and thus the lens frame 152 is heated upon absorption of the laser beam. In this state, the intermediate member 153 is heated by the heat of the lens frame 152. Then, the intermediate member 153 thermally expands to fill in the clearance between the intermediate member 153 and the lens 151. Then the intermediate member 153 is brought into close contact with each of the fixing portion 156 and the surface of the lens 151, and thus the lens 151 and the intermediate member 153, and the lens frame 152 and the intermediate member 153, respectively, are fixed by adhesion. At this stage, the irradiation of the laser beam is ended.

When the irradiation of the laser beam is ended, the contacting portion of the intermediate member 153 and the lens 151 and the contacting portion of the intermediate member 153 and the lens frame 152 are fixed in place. Further, the intermediate member 153 quickly cools and solidifies. In this regard, because the contacting portion between the intermediate member 153 and the lens 151 and the contacting portion between the intermediate member 153 and the lens frame 152 are in intimate contact, the intermediate member 153 cannot contract by a volume equivalent to the clearance. Accordingly, even after the irradiation of the laser beam, a force that presses the contacting portion between the lens 151 and the lens frame 152 under pressure remains, whereby it is possible to fix the lens 151 with high accuracy to be supported by the lens frame 152.

In addition, there is no wall surface surrounding the outer diameter (edge) of the lens 151 in the outer peripheral portion of the lens frame 152, and thereby it is possible to fix the lens 151 to the lens frame even when the lens 151 is not centered, without requiring a high quality of the components.

In this embodiment, the laser beam is irradiated when the lens 151 and the intermediate member 153 are simply inserted into the lens frame 152. However, the irradiation of the laser beam may be carried out, for example, in a state where the lens 151 is supported by a vacuum suction tool or the like, the lens frame 152 is aligned, and this state is maintained.

### Eighth Embodiment

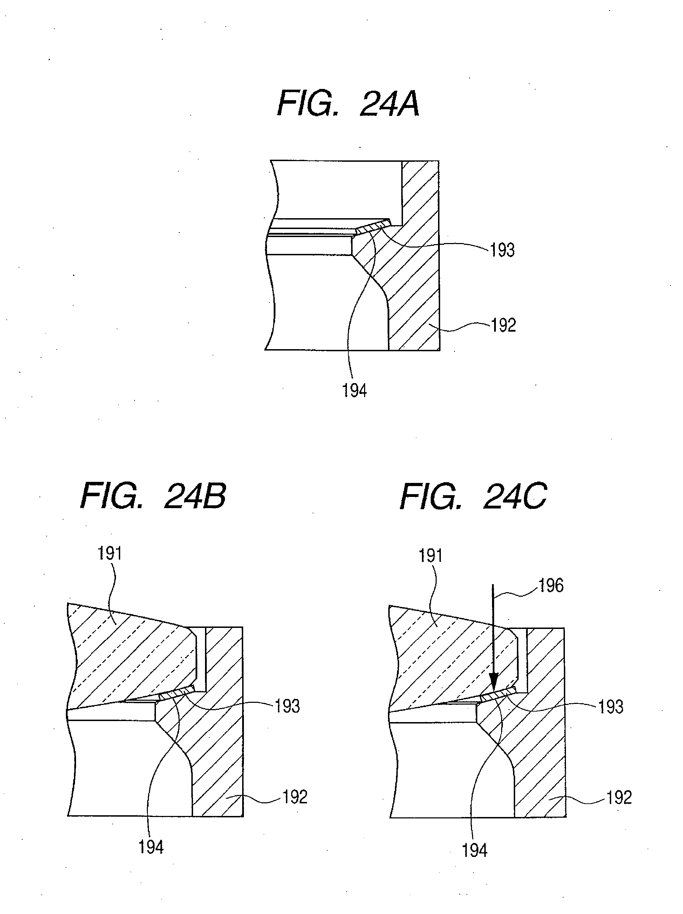

Next, an eighth embodiment of the present invention is explained with reference to FIGS. 23, 24A, 24B, and 24C. FIG. 23 is a plan view and a side view of an intermediate member as used for a method of fixing an optical member according to an eighth embodiment of the present invention. FIG. 24A is a longitudinal sectional view showing a state where the intermediate member is incorporated into a lens frame. FIG. 24B is a longitudinal sectional view showing a state where a lens is also incorporated into the lens frame. FIG. 24C is a longitudinal sectional view showing an irradiating state of a laser beam at the time of fixing the lens to the lens frame.

A lens assembly according to this embodiment is, as shown in FIGS. 24A, 24B, and 24C, provided with a lens 191 (in the present example a convex lens), a lens frame 192, and an intermediate member 193 intervening between the lens 191 and the lens frame 192. The lens frame 192 is configured with a cylindrical member, and is provided with a positioning ridge portion 194 on an inner peripheral surface of the lens frame for positioning the lens 191 and the intermediate member 193 in the lens frame 192. The positioning portion 194 is configured with a portion protruded from the inner peripheral surface of the lens frame 192, and a surface of the protruding portion opposing the lens 191 is formed in a shape corresponding to a surface of the lens 191. The intermediate member 193 is positioned by the positioning portion 194 with respect to the lens frame 192 so that the intermediate member 193 does not project into an effective diameter of the lens 191. In addition, the lens 191 and the intermediate member are positioned in the optical axis direction of the lens frame 192.

In this embodiment, as shown in FIG. 23, the intermediate member 193 has a dish-like shape whose center portion is open. The outer peripheral portion of the intermediate member 193 is shaped to correspond to the surface of the lens 191. Further, the intermediate member 193 is formed in the shape of the lens 191 after stamping a planar sheet material into a circular ring shape. Accordingly, the intermediate member 193 is brought into close contact with the surface of the lens 191 and the positioning portion 194 without any wrinkles, as shown in FIG. 24B.

When first fixing the lens 191 to the lens frame 192, as shown in FIG. 24A, the intermediate member 193 is inserted into the lens frame 192, and the intermediate member 193 is positioned within the lens frame 192 by the positioning portion 194. Then, as shown in FIG. 24B, the lens 191 is inserted into the lens frame 192 into which the intermediate member 193 has already been arranged, and the lens 191 is positioned within the lens frame 192 by the positioning portion 194. In this case, the intermediate member 193 is resilient, and is elastically deformed to be held between the positioning portion 194 of the lens frame 192 and the surface of the lens 191.

When the lens 191 is incorporated into the lens frame 192 via the intermediate member 193 in this way, the lens 191 is pressed in the optical axis direction of the lens 191 toward the intermediate member 193 by a pressurizing device (not shown). Then, as shown in FIG. 24C, a laser beam 196 having a wavelength corresponding to near-infrared light is irradiated from the laser irradiation device (not shown) toward the positioning portion 194 in the lens frame 192. By the irradiation of the laser beam 196, the contacting portion between the intermediate member 193 and the lens 191 and the contacting portion between the intermediate member 193 and the lens frame 192 are fixed. Accordingly, the lens 191 is positioned and fixed to the lens frame 192 with high accuracy, without play.

In this embodiment, for the method of forming the dish-like intermediate member 193 whose center portion is opened, a method in which the sheet material is stamped into the circular shape and then the circular portion is formed in the shape along the surface of the lens 191 is described. However, the present invention is not limited to this. Other methods may be adopted for forming the dish-like intermediate member whose center portion is opened. This application is a divisional application of European patent application no. EP05258055.2 (the "parent application"), also published under no. EP-A-1674910. The original claims of the parent application are repeated below in the present specification and form part of the content of this divisional application as filed.
1. A method of fixing a light transmissive optical member (151) to a further optical member or support (152), the method comprising the steps of: providing an intermediate member (153) between the light transmissive optical member and the further optical member or support, the intermediate member consisting of or including a hot-melt adhesive or thermosetting material; aligning the light transmissive member relative to the further optical member or support; urging the light transmissive optical member and the further optical member or support towards one another; and curing the intermediate member to fix the light transmissive optical member, intermediate member and further optical member.
2. A method of fixing a light transmissive optical member to a further optical member or support as claimed in claim 1, in which the intermediate member is first cured at selected points to fix it to either the light transmissive optical member or the further optical member or support to form a first assembly, the intermediate member being subsequently heated at different points to fix it to the other member.
3. A method of fixing a light transmissive optical member to a further optical member or support as claimed in claim 1, in which the intermediate member is cured at selected points to fix it to both the light transmissive optical member and the further optical member in a single step.
4. A method of fixing a light transmissive optical member to a further optical member or support as claimed in claim 1 or claim 2 in which the intermediate member is adapted to absorb electromagnetic radiation having a given of wavelength or wavelengths, and the intermediate member is cured by irradiation with electromagnetic radiation having said given wavelength or wavelengths.
5. A method of fixing a light transmissive optical member to a further optical member or support as claimed in claim 1 or claim 2, in which the further optical member or support is adapted to absorb electromagnetic radiation having a given of wavelength or wavelengths adjacent the intermediate member, and the intermediate member is heated through contact with the further optical member or support, the further optical member or support being heated by irradiation with electromagnetic radiation having said given wavelength or wavelengths.
6. A method as claimed in claim 3 or 4 in which the electromagnetic radiation passes through the light transmissive optical member prior to absorption.
7. A method as claimed in any preceding claim in which the intermediate member has the form of an annular body or annular sheet.
8. A method as claimed in claim 6 in which the annular body or sheet has at least one notched portion formed in at least one of an inner peripheral portion and an outer peripheral portion of the body or sheet.
9. An optical unit comprising a light transmissive optical member (151) and a support member (152)for supporting said optical member, **characterized in that** the optical unit further comprises an intermediate member (153) disposed between the light transmissive optical member and the support member, the intermediate member comprising a light curing adhesive or hot melt adhesive or thermosetting material which securely attaches the light transmissive optical member to the support member.
10. An optical unit as claimed in claim 8 in which the intermediate member has the form of an annular body or annular sheet.
11. An optical unit as claimed in claim 9 in which the annular body or sheet has at least one notched portion formed in at least one of an inner peripheral portion and an outer peripheral portion of the body or sheet.
12. An optical unit as claimed in any one of claims 8 to 10 in which the intermediate member extends along the outer edge of the light transmissive optical member in a direction parallel to the optical axis of the optical unit.
13. An optical unit as claimed in any one of claims 8 to 11 in which the intermediate member is resilient.

## Claims

1. A method of fixing a light transmissive optical member (151) to a support member (152) the method **characterized by** comprising the steps of:
providing an intermediate member (153) between the light transmissive optical member and the support member, wherein the intermediate member is positioned without extending into the effective area of the light transmissive optical member, is made of a sheet material and is adapted to have increased adhesive strength upon application of heat and the support member is adapted to be heated by absorption of electromagnetic radiation having a given wavelength or wavelengths;
bringing the light transmissive optical member into contact with the support member such that the light transmissive optical member is in direct contact with a positioning portion (154), formed on the supporting member, for positioning the light transmissive optical member and a clearance is provided between the intermediate member and the light transmissive optical member; and
heating the support member by irradiating it, with electromagnetic radiation having the given wavelength or wavelengths from a laser, wherein the laser irradiates the support member through the light transmissive optical member,
wherein the intermediate member is heated by the heat of the support member, and
wherein the intermediate member is thermally expanded to fill in the clearance between the intermediate member and the light transmissive optical member.

2. A method of fixing a light transmissive optical member to a support member as claimed in claim 1, in which the intermediate member is heated to fix it to both the light transmissive optical member and the support member in a single step.

3. A method as claimed in any preceding claim in which the intermediate member has a ring-like shape.

4. A method as claimed in claim 3 in which the ring-like shape has at least one notched portion formed in at least one of an inner peripheral portion and an outer peripheral portion.

5. A method as claimed in claim 1, wherein the support member (152) is a lens frame and the light transmissive optical member is a lens.

6. The method of any preceding claim used to make an optical unit.
